# FASCICULE DE BREVET EUROPEEN

(11) **EP 1 546 989 B1**
(45) Date de publication et mention de la délivrance du brevet: **13.05.2009**
(21) Numéro de dépôt: 03798212.1
(22) Date de dépôt: 17.09.2003
(51) Int. Cl.: G06K 7/00

(54) **LECTEUR DE CARTE A PUCE A BOITIER TRANSPARENT**
CHIPKARTENLESER MIT DURCHSICHTIGEM GEHÄUSE
CHIP CARD READER WITH A TRANSPARENT HOUSING

(30) Priorité: 27.09.2002 FR 0212028
(43) Date de publication de la demande: 29.06.2005
(73) Titulaire: GEMPLUS, 13881 Gémenos Cedex (FR)
(72) Inventeur: CUNIN, Hervé, F-13100 Aix en Provence (FR); ROMERO-LICERAS, Carlos, F-06800 Cagnes sur Mer (FR); VIANDE, Jean-Marc, F-83740 La Cadière d'Azur (FR)
(86) Numéro de dépôt international: PCT/FR2003/002737
(87) Numéro de publication internationale: WO 2004/029857

(56) Documents cités:
- WO-A-01/43032
- DE-A- 3 637 684
- FR-A- 2 812 959
- PATENT ABSTRACTS OF JAPAN vol. 2002, no. 03, 3 avril 2002 (2002-04-03) & JP 2001 331234 A (MATSUSHITA ELECTRIC IND CO LTD), 30 novembre 2001 (2001-11-30)

## Description

La présente invention concerne étui de raccordement d'un dispositif terminal avec une carte à puce.

L'invention concerne plus particulièrement un lecteur pour le raccordement d'une carte à mémoire électronique, aussi appelée carte à puce, de format rectangulaire, du type carte bancaire ou carte "SIM" (Subscriber Identification Module) dont une face, dite face principale, comporte un pavé de plages de contact électrique dont les dimensions et la position dans la face principale sont normalisées pour chaque type ou modèle de carte.

Le pavé de contact se présente ainsi généralement sous la forme d'un rectangle, éventuellement carré, qui comporte deux séries plages conductrices alignées transversalement, chaque série comportant par exemple trois ou quatre plages conductrices parallèles.

Le pavé est disposé à proximité du bord transversal avant de la carte et est globalement centré dans la largeur de la carte.

Le reste de la surface de la face principale de la carte, de même que sa face inférieure opposée à la face principale, est "libre" de tout aspect fonctionnel, c'est à dire qu'il peut comporter sur tout ou partie de la surface qui n'est pas occupée par le pavé de contact, des indications visuelles.

Ces indications visuelles peuvent notamment "personnalise" la carte en fonction de sa destination ou utilisation, en identifiant son émetteur et/ou son destinataire, et/ou avoir un caractère publicitaire et/ou décoratif.

Il peut s'agir de dessins, de pictogrammes, de photographies, de caractères alphanumériques et de combinaisons de ces éléments, etc.

Lorsque la carte n'est pas utilisée, la totalité de la surface de la face principale est accessible visuellement.

Il n'en est pas de même lorsque la carte est introduite dans le boîtier d'un lecteur pour son raccordement électrique en vue de son utilisation.

A cet effet, le boîtier est du type comportant deux glissières longitudinales opposées délimitant une fente horizontale d'introduction et de guidage longitudinal de la carte dans le boîtier et un fond transversal constituant une butée avec laquelle coopère le bord transversal avant de la carte pour définir une position géométrique fonctionnelle de la carte par rapport au boîtier.

De manière connue, pour le raccordement par contact avec les plages de contact, le boîtier du lecteur comporte un connecteur électrique dont des éléments de contact en forme de lames de contact s'étendent vers le bas en direction de la face supérieure de la carte.

L'agencement et la position du connecteur dans le boîtier sont tels que, en position fonctionnelle d'utilisation de la carte, aussi appelée position de contact, les lames de contact du connecteur sont en contact individuellement avec une plage de contact.

Selon une conception connue, le lecteur peut aussi comporter un ou plusieurs autres composants électriques et/ou électroniques tel que notamment un circuit intégré pour la gestion sécurisée d'échanges de données entre la carte et un dispositif terminal tel qu'un ordinateur auquel lequel le lecteur est relié, par exemple au moyen d'un câble de liaison pour par tout autre type de liaison sans fils, ni câble.

L'ensemble constitue ainsi un dispositif appelé lecteur de carte à puce avec microcontrôleur.

Son fonctionnement dit "sécurisé" est assuré par un composant de sécurité exécutant des programmes spécifiques liés à la sécurité d'une application particulière.

Un lecteur doit être sécurisé notamment pour qu'il n'y ait pas de fraude(s) lors de l'exécution de l'application, notamment lorsque l'application a des implications financières.

Le circuit électronique ou microcontrôleur est pourvu d'une mémoire morte de programmes, pour exécuter un programme applicatif qui est figé dans cette mémoire.

Le lecteur peut en outre comporter au moins un autre composant électronique, dit de sécurité, distinct du microcontrôleur, qui est capable d'exécuter des programmes spécifiques relatifs à la sécurité ou à des éléments confidentiels de l'application sous la commande du microcontrôleur de telle manière que toute communication de données entre la carte à puce et le composant de sécurité passe obligatoirement par le microcontrôleur.

Ainsi, outre le composant électrique que constitue le connecteur pour le raccordement avec la puce ou module de la carte, le boîtier doit aussi pouvoir loger un ou plusieurs composants électroniques pour le fonctionnement de l'application.

Le boîtier d'un tel lecteur se présente ainsi sous la forme d'un élément fermé comportant un logement borgne dans lequel on introduit longitudinalement la carte d'arrière en avant.

La carte peut être introduite entièrement dans le boîtier qui se présente alors sous la forme d'un étui qui enveloppe ou entoure entièrement la carte, ou bien elle peut être introduite seulement partiellement dans le boîtier dans lequel seul un tronçon longitudinal avant de la carte est alors reçu. Typiquement, la longueur de ce tronçon est comprise entre un tiers et la moitié de la longueur totale de la carte.

Le boîtier est généralement réalisé par moulage en matière plastique opaque.

Il en résulte qu'il masque à la vue des utilisateurs, une grande partie des faces principale et inférieure de la carte.

Ainsi, tous les efforts des producteurs et des émetteurs de cartes pour y faire figurer des indications visuelles sont anéantis, car la carte, pour tout ou partie, n'est plus visible.

Afin de remédier à cet inconvénient, on a déjà proposé de faire figurer sur les faces externes supérieure et inférieure du boîtier du lecteur des indications visuelles identiques à celles figurant sur la carte et qui sont positionnées de manière à "compléter" celles figurant sur la partie de la carte qui s'étend à l'extérieur du boîtier et qui est encore visible depuis l'extérieur.

Toutefois, une telle solution oblige à spécifier le boîtier, et donc le lecteur pour une carte particulière.

Le document DE 36 37 684 A1 décrit et représente un appareil électronique susceptible de recevoir une carte à mémoire électronique à plages de contact électrique et touches alphanumériques. L'appareil comprend un boîtier avec une fente d'introduction de la carte, un connecteur électrique pour le raccordement avec les plages de contact et une découpe dans une face du boîtier pour accéder aux touches alphanumériques.

Le document JP 2001 331 234 décrit un ordinateur portable comportant un lecteur de carte à puce intégré muni d'une fenêtre transparente dans la coque de l'ordinateur au dessus de la carte permettant de voir une information affichée par la carte. Un bloc de connecteur et circuit de contrôle de la carte s'étend dans l'ordinateur au delà de la largeur de la carte.

Afin de remédier à ces inconvénients, l'invention propose un lecteur de carte à puce conforme à la revendication 1 et un boîtier de raccordement de carte à puce conforme à la revendication 24.

Selon d'autres caractéristiques de l'invention :
- le corps du boîtier comporte deux glissières longitudinales opposées délimitant la fente horizontale d'introduction et de guidage longitudinal de la carte dans le boîtier, et un fond transversal constituant une butée avec laquelle un bord transversal avant de la carte coopère pour définir la position fonctionnelle de la carte par rapport au boîtier ;
- la zone d'implantation du bloc de composants est reliée aux glissières par deux bras supérieurs opposés qui s'étendent globalement selon une direction transversale ;
- la largeur moyenne de chaque bras de liaison est sensiblement égale à la longueur de la glissière associée ;
- la longueur de la glissière est inférieure à la longueur de la carte ;
- la longueur de la glissière est sensiblement égale à un tiers de la longueur de la carte ;
- les glissières sont décalées longitudinalement vers l'arrière par rapport au bord transversal avant de la carte lorsque cette dernière occupe sa position fonctionnelle ;
- le bloc de composants est agencé à l'extrémité longitudinale avant du boîtier, et les deux bras supérieurs de liaison s'étendent sensiblement en V, vers l'arrière à partir de la zone d'implantation du bloc de composants ;
- la zone d'implantation du bloc de composants est un logement formé dans une portion centrale, de la paroi supérieure, du boîtier qui est réalisée en matériau transparent ;
- la paroi supérieure du boîtier est réalisée par moulage en matériau plastique transparent ;
- le lecteur comporte une paroi inférieure qui s'étend transversalement entre les glissières et qui est réalisée en matériau transparent ;
- la paroi inférieure du boîtier est réalisée par moulage en matériau plastique transparent ;
- la largeur transversale maximale du bloc de composants est sensiblement égale à la largeur transversale du pavé de contact ;
- la largeur transversale du connecteur électrique est sensiblement égale à la largeur transversale du pavé de contact ;
- le bloc de composants comporte une plaque support en matériau isolant de contour sensiblement rectangulaire qui est située au-dessus du pavé de contact sensiblement au droit de ce dernier, et qui porte les composants du bloc de composants ;
- la plaque support est une plaque à circuit imprimés ;
- le connecteur électrique est monté sous la face inférieure de la plaque à circuits imprimés, et les autres composants sont agencés sur la face supérieure de la plaque à circuits imprimés ;
- la plaque support appartient au connecteur électrique, et les autres composants sont agencés sur la face supérieure de la plaque support ;
- la face supérieure de la plaque support porte au moins un témoin lumineux visible depuis l'extérieur à travers le boîtier ;
- la largeur transversale de la plaque support est sensiblement égale à la largeur transversale du pavé de contact ;
- le bord transversal arrière de la plaque à circuits imprimés est situé sensiblement au droit du bord transversal arrière du pavé de contact ;
- la plaque support s'étend longitudinalement vers l'avant au-delà du bord transversal avant du pavé de contact ;
- l'extrémité transversale avant de la plaque support comporte des moyens pour le raccordement du bloc de composants avec un câble de liaison du boîtier avec un dispositif terminal auquel est relié le lecteur.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique de dessus de la face principale d'une carte à puce normalisée ;
- la figure 2 est une similaire à celle de la figure 1 sur laquelle on a représenté de manière schématique un bloc de composants portés par une plaque à circuits imprimés, avec son câble de liaison en direction d'un ordinateur ;
- la figure 3 est une vue en perspective de dessus et de trois-quarts arrière d'un exemple de réalisation d'un lecteur à boîtier transparent conforme aux enseignements de l'invention ;
- la figure 4 est une vue schématique de dessus du lecteur de la figure 3 en association avec une carte, avant son introduction dans le boîtier ;
- la figure 5 est une vue analogue à celle de la figure 4 sur laquelle la carte est représentée en position fonctionnelle de contact après son introduction dans le boîtier du lecteur;
- les figures 6 et 7 sont des vues de dessous analogues à celles des figures 4 et 5 ;
- la figure 8 est une vue schématique en section par le plan vertical et longitudinal médian 8-8 de la figure 5.

Dans la description qui va suivre, ainsi que dans les revendications, on utilisera à titre non limitatif les termes longitudinal, transversal, vertical en référence au trièdre LTV représenté aux figures, ainsi que les termes avant et arrière selon l'axe longitudinal et tels qu'ils seront définis dans la description.

Des composants identiques, analogues ou similaires seront désignés par les mêmes chiffres de référence.

On a représenté aux figures un lecteur pour le raccordement d'une carte C avec un appareil électronique ou dispositif terminal , non représenté, tel qu'un ordinateur, auquel le boîtier 10 du lecteur est relié par un câble de liaison 12.

La carte C est ici une carte à puce normalisée couramment utilisée notamment pour constituer une carte de paiement dans un réseau bancaire, qui est de forme générale rectangulaire avec ses quatre coins arrondis.

La carte C comporte une face supérieure plane horizontale principale 14 et une face inférieure parallèle 16.

La carte est délimitée latéralement par deux bords longitudinaux parallèles 18 et par deux bords transversaux avant 20 et arrière 22 qui correspondent à la largeur transversale de la carte C.

De manière normalisée, la face supérieure principale 14 est celle comportant le module électronique ou puce 24 dont la position géométrique dans la face 14 est parfaitement définie et normalisée.

Dans ce type de carte, la puce 24 est situé à proximité du bord transversal avant 20 et elle est sensiblement centrée transversalement, en étant toutefois légèrement décalée vers l'un des bords longitudinaux.

On a représenté sous forme d'une zone hachurée 26 les portions, ici de la face supérieure, qui sont définies comme devant servir au guidage de la carte et autres fonctions mécaniques, ainsi que pour définir la zone entourant le module.

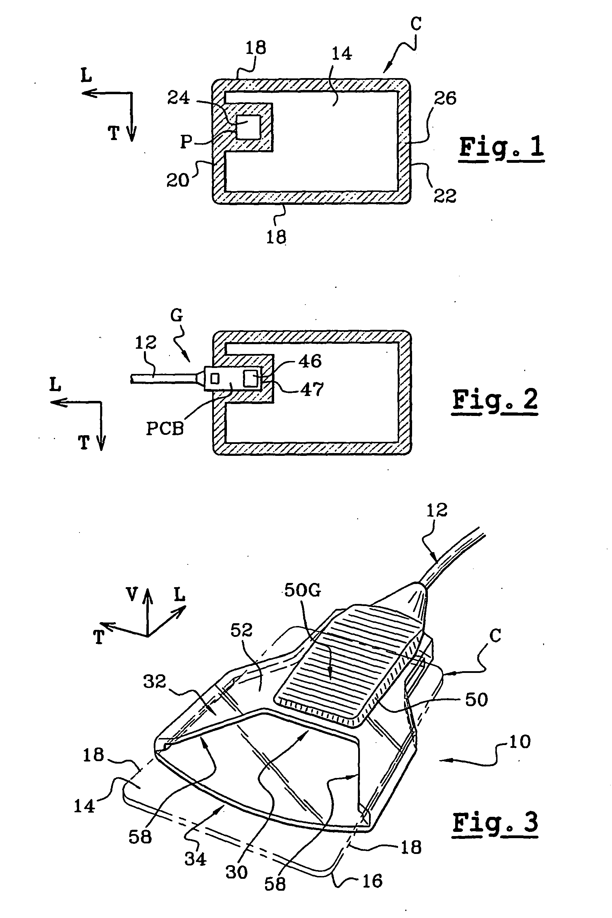

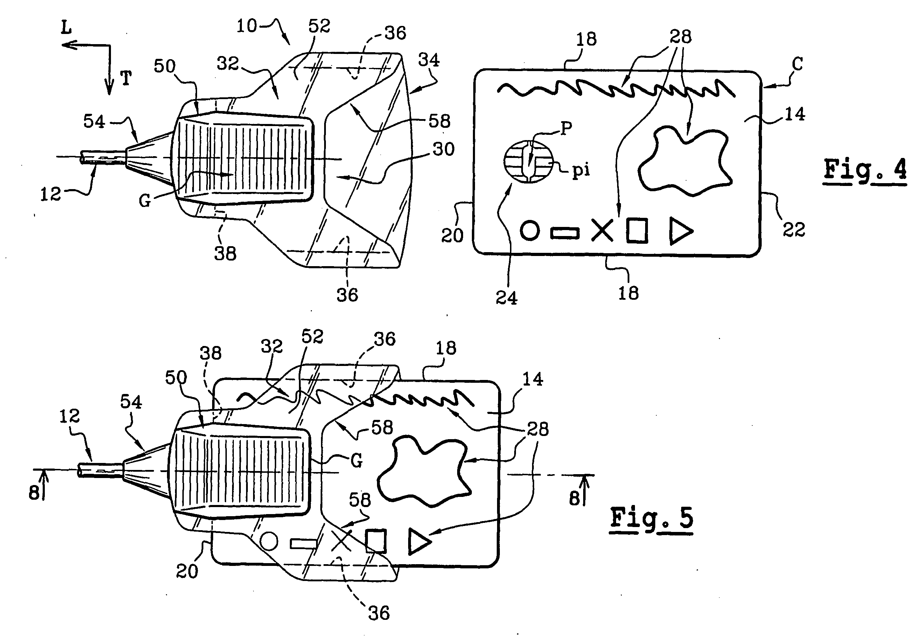

De manière connue, comme on peut le voir notamment à la figure 4, pour le raccordement électrique avec le module à circuit(s) intégré(s) 24, la face supérieure 14 comporte un pavé P de plages de contact électrique pi qui est situé verticalement au-dessus du module et donc globalement dans la zone géométrique normalisée 24 indiquée aux figures 1 et 2.

Le restant de la surface de la face supérieure principale 14 est libre, et il comporte généralement des indications visuelles 28 de différentes natures, telles que des inscriptions, des dessins, des photographies, des caractères alphanumérique, etc.

En fonction des souhaits du producteur ou de l'émetteur de la carte, ces indications visuelles 28 peuvent revêtir la totalité de la surface supérieure 14, à l'exception bien entendu de la zone occupée par le module, c'est-à-dire plus précisément par le pave P de plages pi de contact.

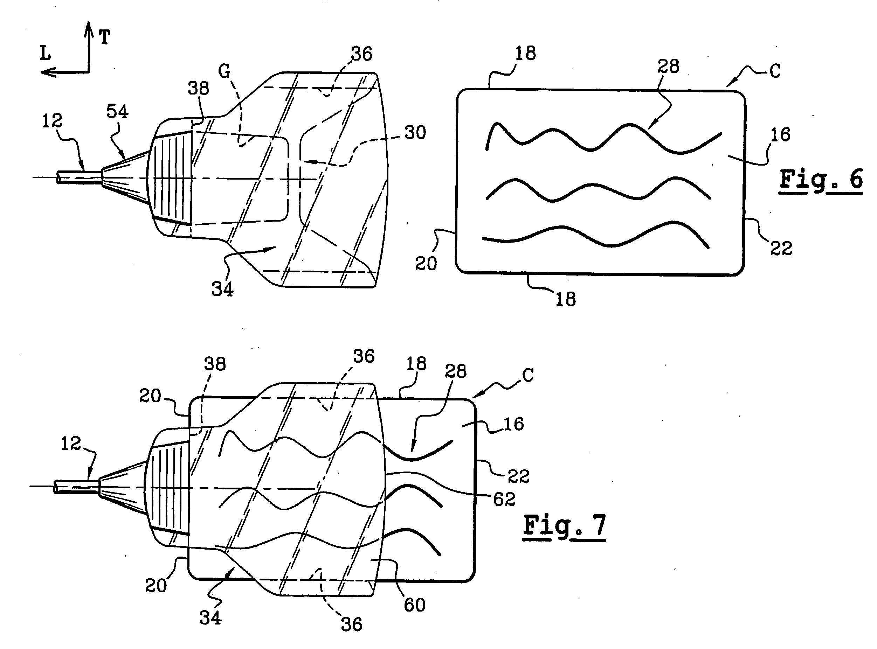

Comme on peut le voir aux figures 6 et 7, la face inférieure 16 de la carte C peut aussi comporter des indications visuelles sur toute sa surface qui est ici entièrement disponible pur de telles inscriptions dans la mesure où elle ne comporte ni module, ni plages de contact.

Sur la face inférieure 16, les indications 28 peuvent notamment consister en du texte comportant un mode d'emploi de la carte C et/ou de l'application intégrée au lecteur.

De manière connue, le boîtier 10 se présente sous la forme d'un corps de forme générale aplatie, au moins partiellement complémentaire de la forme rectangulaire de la carte C, et qui comporte notamment une fente horizontale 30 permettant l'introduction longitudinale de la carte C d'arrière en avant, c'est-à-dire de la droite vers la gauche, en considérant les figures 4 à 7, la fente 30 étant à cet effet débouchante vers l'arrière.

Comme dans l'exemple de réalisation représenté aux figures, le corps du boîtier 10 est réalisé en deux parties supérieure 32 et inférieure 34 qui, après assemblage, sont reliées entre elles par tous moyens adaptés selon un plan de joint horizontal correspondant sensiblement au plan de la fente horizontale 30, et donc au plan de la carte C.

Le boîtier 10 comporte des moyens de guidage et de positionnement de la carte C en position fonctionnelle de contact dans le boîtier 10, des moyens de raccordement électrique avec les plages pi de la carte C, des composants électroniques spécifiques à une application, et un câble 12 de liaison du lecteur avec l'extérieur.

De manière connue, pour le guidage et le positionnement de la carte, ainsi que pour définir la fente d'introduction 30, le boîtier 10 comporte deux glissières longitudinales opposées 36 dont l'écartement transversal correspond à la largeur séparant les deux bords longitudinaux parallèles 18 de la carte C qui sont reçus en coulissement entre les glissières 36 dont la hauteur correspond sensiblement à l'épaisseur de la carte.

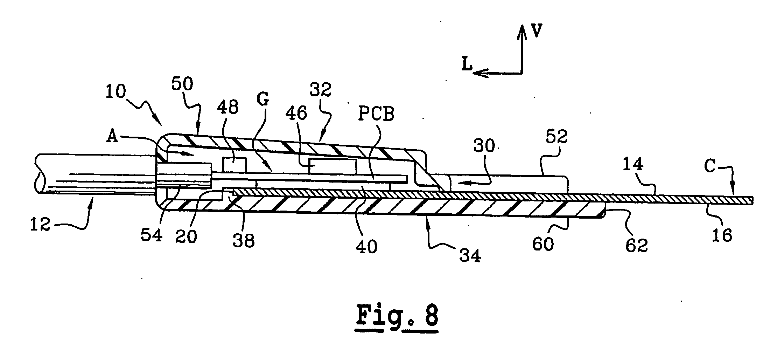

Pour positionner longitudinalement la carte C dans le boîtier 10, et donc dans le lecteur, la fente 30 est délimitée longitudinalement vers l'avant par un fond transversal 38 qui, comme on peut le voir à la figure 8, est par exemple réalisé dans la paroi ou partie inférieure 34 du boîtier 10.

Le fond transversal 38 constitue une butée contre laquelle le bord transversal avant 20 de la carte C vient en appui pour définir la fin de la course d'introduction longitudinale de la carte C dans le boîtier 10 et donc pour définir, en combinaison avec les glissières 36, la position du pavé P de plages pi par rapport au boîtier 10.

De manière connue, pour assurer le raccordement électrique avec les plages pi, le boîtier 10 comporte un connecteur électrique 40, de conception générale connue (non représenté en détail) qui comporte notamment des lames de contact déformable élastiquement qui coopèrent avec les plages qui s'étendent à partir d'une plaque support en matériau plastique isolant. Les lames de contact, non représentées, du connecteur s'étendent verticalement vers le bas en direction de la face supérieure de la carte C lorsque cette dernière est en position dans le boîtier 10.

Dans le mode de réalisation représenté aux figures, le connecteur électrique 40 est fixé sous la face inférieure 42 d'une plaque à circuits imprimés PCB qui est logée dans la partie ou paroi supérieure 32 du boîtier 10 et qui, dans ce mode de réalisation, constitue la plaque support de tous les composants du groupe ou bloc de composants.

Sur sa face supérieure 44, la plaque PCB porte au moins un circuit électronique 46 tel qu'un microcontrôleur et par exemple une diode LED 48 qui constitue un voyant lumineux indicatif du fonctionnement des circuits électroniques du lecteur.

Enfin, à son extrémité longitudinale avant, c'est-à-dire à gauche en considérant la figure 8, la plaque PCB comporte des moyens pour le raccordement de ses circuits avec le câble de liaison 1 2 qui s'étend longitudinalement vers l'avant, à l'extérieur du lecteur 10.

Comme on peut le voir notamment à la figure 2, la plaque PCB est de forme globalement rectangulaire et ses dimensions et son positionnement sont tels qu'elle s'étend verticalement sensiblement au-dessus et au droit du module 24 et donc des plages de contact pi du pavé P sans dépasser ou déborder d'aucune manière sur les autres parties de la face supérieure 14 qui entoure le pavé P (ou module 24).

La plaque PCB, avec le connecteur 40 et les autres composants 46, 48 qu'elle porte, constitue ainsi le groupe ou bloc G de composants du boîtier 10 qui est logé dans la partie supérieure 32, au-dessus du module 24 avec son pavé P de plages pi de contact.

A cet effet, la partie supérieure 32 comporte une partie centrale avant 50 formant un renflement, ou partie en saillie, au-dessus de la face supérieure globalement horizontale 52 de la partie supérieure 32.

Comme on peut le voir notamment aux figures 4 et 5, le renflement central 50 s'étend longitudinalement vers l'avant au-delà du fond transversal 38, et donc au-delà du bord transversal avant de la carte 20 lorsque cette dernière est en place dans le boîtier 10, notamment pour permettre l'agencement du câble de liaison 12 avec ses moyens 54 de connexion avec la plaque PCB.

Les moyens 54 sont réalisés soit de manière à appartenir à demeure au boîtier 10, soit sous la forme de connecteurs (non représentés en détail) pouvant être branchés ou débranchés du boîtier, tel que par exemple un connecteur normalisé USB.

Conformément aux enseignements de l'invention, au moins la partie supérieure 32 du boîtier 10 est réalisée par moulage en matériau plastique transparent ou translucide, et seule la partie centrale ou renflement 50 qui loge le groupe ou bloc de composants G n'est pas transparente, c'est-à-dire que seule cette zone ne permet pas de voir la surface de la face principale 14.

Dans la mesure où le groupe ou bloc de composant G s'étend globalement seulement au-dessus du pavé de contact P, quasiment toutes les indications visuelles 28 sont visibles, notamment par transparence à travers la partie supérieure 32 en matériau transparent.

Afin d'améliorer encore la visibilité des indications 28, la partie centrale 50 d'implantation du groupe ou bloc de composants G est reliée aux glissières 36 par deux bras supérieurs opposés 58 qui s'étendent transversalement à partir de la partie centrale 50, et ici en biais de manière inclinée de l'avant vers l'arrière de façon à constituer sensiblement la forme d'un V, en vue de dessus.

La largeur de chaque bras 58 est sensiblement égale à la longueur de la glissière associée 36 et la longueur de la glissière 36 est nettement inférieure à la longueur du bord longitudinal 18 de la carte C, et elle est ici égale à sensiblement un tiers de cette longueur.

Afin d'assurer un bon guidage et un bon maintien en position de la carte C dans le boîtier 10, les glissières 36 sont décalées longitudinalement vers l'arrière par rapport au fond transversal 38, et donc par rapport au bord transversal avant de la carte 20 lorsque celle-ci est en position, de manière à assurer le guidage longitudinal des bords 18 au niveau d'un tronçon central de ces bords 18.

Ainsi, seuls les bras 58 courts et transparents s'étendent au-dessus de la face supérieure 14 dont la partie principale de la surface est visible directement depuis l'extérieur.

Comme on peut le voir notamment aux figures 6 et 7, la partie inférieure 34 du boîtier est globalement complémentaire de la partie supérieure 32, elle est aussi ici réalisée de préférence par moulage en matériau plastique transparent et se présente globalement sous la forme d'une plaque ou paroi 60 à fond horizontal.

Afin d'assurer un bon maintien et un bon positionnement de la carte C, la parie inférieure 34 n'est pas évidée à l'arrière (pour être conformée avec des bras en V), mais elle est délimitée par un bord transversal arrière 62.

Ainsi, la plaque inférieure 34 constitue un fond transparent qui s'étend sensiblement sur plus de la moitié de l'aire de la face inférieure 16 de la carte C.

Toutefois, comme on peut le voir à la figure 7, la totalité des indications 28 est visible directement de l'extérieur, ou indirectement par transparence à travers la partie inférieure 34.

La largeur transversale du connecteur électrique 40 est traditionnellement sensiblement égale à la largeur transversale du pavé P de contact.

Avantageusement, la largeur transversale maximale du groupe ou bloc de composants G correspondant à la largeur transversale de la plaque PCB est sensiblement égale à la largeur transversale du connecteur 40 agencé sous la face inférieure 42 de la plaque PCB, cette largeur totale du groupe ou bloc G étant ainsi avantageusement inférieure ou égale à la largeur transversale du pavé P de contact.

Comme on peut le voir à la figure 2, le bord transversal arrière 47 de la plaque PCB est sensiblement agencé au droit du bord transversal arrière du module 24, c'est-à-dire du pavé P de contact tandis que la plaque PCB s'étend longitudinalement au-delà du bord transversal avant du pavé P.

Le fait que la partie supérieure 32 soit moulée en matériau plastique transparent permet de voir depuis l'extérieur l'allumage ou l'extinction de la diode LED 48.

Selon une variante de réalisation non représentée, la plaque à circuits imprimés peut être supprimée, et la plaque support des composants du groupe ou bloc de composants est alors constituée par la plaque rectangulaire en matériau plastique isolant du connecteur qui porte les lames de contact et dont la face supérieure porte alors les autres composants pour constituer le bloc ou groupe de composants.

## Revendications

1. Lecteur de carte (C) à puce (24) pour connecter une carte à puce à plages de contact électrique à un dispositif terminal externe, ledit lecteur comprenant:
- un boîtier dont la corps (32, 34) définit une position fonctionnelle de la carte à l'intérieur du corps,
- au moins un connecteur électrique (40) interne pour raccorder les plages de contact (pi) de la carte à puce,
- des moyens de connexion (54) pour connecter ledit dispositif terminal externe,
- ledit corps comprenant au moins une partie (52, 58, 60) couvrant directement et partiellement ladite position fonctionnelle,
**caractérisé en ce que** ladite partie (52, 58, 60) est réalisée en matériau transparent ou translucide.

2. Lecteur de carte à puce selon la revendication 1, **caractérisé en ce que** ladite partie (52, 58, 60) est réalisée par moulage.

3. Lecteur selon la revendication précédente, **caractérisé en ce que** la zone (50) d'implantation du bloc (G) de composants est reliée aux glissières (36) par deux bras supérieurs opposés (58) qui s'étendent globalement selon une direction transversale.

4. Lecteur selon la revendication précédente, **caractérisé en ce que** la largeur moyenne de chaque bras de liaison (58) est sensiblement égale à la longueur de la glissière associée (36).

5. Lecteur selon l'une des revendications 3 ou 4, **caractérisé en ce que** la longueur de la glissière (36) est inférieure à la longueur de la carte (C).

6. Lecteur selon la revendication précédente**, caractérisé en ce que** la longueur de la glissière (36) est sensiblement égale à un tiers de la longueur de la carte (C).

7. Lecteur selon l'une des revendications 5 ou 6, **caractérisé en ce que** les glissières (36) sont décalées longitudinalement vers l'arrière par rapport au bord transversal avant (20) de la carte (C) lorsque cette dernière occupe sa position fonctionnelle.

8. Lecteur selon l'une quelconque des revendications 3 à 7, **caractérisé en ce que** le bloc de composants (G) est agencé à l'extrémité longitudinale avant du boîtier (10); et **en ce que** les deux bras supérieurs de liaison (58) s'étendent sensiblement vers l'arrière à partir de la zone (50) d'implantation du bloc (G) de composants.

9. Lecteur selon l'une quelconque des revendications précédentes, **caractérisé en ce que** la zone (50) d'implantation du bloc (G) de composants est un logement formé dans une portion centrale, de la paroi supérieure (32), du boîtier (10) qui est réalisée en matériau transparent.

10. Lecteur selon l'une quelconque des revendications précédentes, **caractérisé en ce que** la paroi supérieure (32) du boîtier est réalisée par moulage en matériau plastique transparent.

11. Lecteur selon l'une quelconque des revendications précédentes, **caractérisé en ce qu'**il comporte une paroi inférieure (34) qui s'étend transversalement entre les glissières (36) et qui est réalisée en matériau transparent.

12. Lecteur selon la revendication précédente, **caractérisé en ce que** la paroi inférieure (37) du boîtier est réalisée par moulage en matériau plastique transparent.

13. Lecteur selon l'une quelconque des revendications précédentes, **caractérisé en ce que** la largeur transversale maximale du bloc de composants (G) est sensiblement égale à la largeur transversale du pavé de contact(P).

14. Lecteur selon l'une quelconque des revendications précédentes, **caractérisé en ce que** la largeur transversale du connecteur électrique est sensiblement égale à la largeur transversale du pavé (P) de contact.

15. Lecteur selon l'une quelconque des revendications précédentes, **caractérisé en ce que** le bloc de composants comporte une plaque support en matériau isolant (PCB) de contour sensiblement rectangulaire qui est située au-dessus du pavé (P) de contact sensiblement au droit de ce dernier, et qui porte les composants (40, 46. 48) du bloc (G) de composants.

16. Lecteur selon la revendication précédente, **caractérisé en ce que** la plaque support est une plaque à circuit imprimés.

17. Lecteur selon la revendication précédente, **caractérisé en ce que** le connecteur électrique (40) est monté sous la face inférieure (42) de la plaque à circuits imprimés (PCB), et **en ce que** les autres composants (46, 48) sont agencés sur la face supérieure (44) de la plaque à circuits imprimés (PCB).

18. Lecteur selon la revendication 15, **caractérisé en ce que** la plaque support appartient au connecteur électrique (40), et **en ce que** les autres composants (46, 48) sont agencés sur la face supérieure (44) de la plaque support.

19. Lecteur selon l'une quelconque des revendications 15 à 18 prise en combinaison avec la revendication 8, **caractérisé en ce que** la face supérieure (44) de la plaque support (PCB) porte au moins un témoin lumineux (48) visible depuis l'extérieur à travers le boîtier (32).

20. Lecteur selon l'une quelconque des revendications 15 à 19 prise en combinaison avec l'une des revendications 13 ou 14, **caractérisé en ce que** la largeur transversale de la plaque support (PCB) est sensiblement égale à la largeur transversale du pavé (P) de contact.

21. Lecteur selon l'une quelconque des revendications 15 à 20, **caractérisé en ce que** le bord transversal arrière (47) de la plaque à circuits imprimés (PCB) est situé sensiblement au droit du bord transversal arrière du pavé (P) de contact.

22. Lecteur selon l'une quelconque des revendications 15 à 21, **caractérisé en ce que** la plaque support (PCB) s'étend longitudinalement vers l'avant au-delà du bord transversal avant du pavé (P) de contact.

23. Lecteur selon l'une quelconque des revendications 15 à 22, **caractérisé en ce que** l'extrémité transversale avant de la plaque support (PCB) comporte des moyens (54) pour le raccordement du bloc de composants avec un câble (12) de liaison du boîtier avec un dispositif terminal auquel est relié le lecteur.

24. Boîtier de raccordement de carte à puce (24) pour connecter une carte à puce à plages de contact électrique à un dispositif terminal externe, ledit boîtier comprenant :
- des moyens de connexion (54) pour connecter un dispositif externe,
- au moins un connecteur électrique (40) interne pour le raccordement avec les plages (pi) électriques de la carte à puce,
- une carte à puce reçue dans ledit boîtier, ladite carte à puce comportant des plages de contact connectées au connecteur électrique et des indications visuelles (28) en surface de la carte,
- un matériau s'étendant au dessus desdites indications visuelles,
**caractérisé en ce que** le matériau est transparent de manière à permettre lesdites indications visuelles d'être visibles à travers le boîtier.

## Claims

1. A chip card reader (24) for the connection of a chip card having electric contact pads to an external terminal device, said reader comprising:
- a housing whose body (32, 34) defines a functional position of the card inside the body,
- at least an internal electric connector (40) for connecting the electric pads (pi) of the chip card,
- connection means (54) for connecting said external terminal device,
said body comprising at least a part (52, 58, 60) directly and at least partly covering said functional position,
**characterized in that** said part is made of transparent or translucent material.

2. A chip card reader according to claim 1, **characterized in that** said part is made by molding.

3. A reader according to the preceding claim, **characterised in that** the component block (G) layout area (50) is connected to the slides (36) by two opposite upper arms (58) which globally extend along a transversal direction.

4. A reader according to the preceding claim, **characterised in that** the average width of each connection arm (58) is substantially equal to the length of the associated slide (36).

5. A reader according to one or claims 3 or 4, **characterised in that** the length of the slide (36) is smaller than the length of the card (C).

6. A reader according to the preceding claim, **characterised in that** the length of the slide (36) is substantially equal to one-third of the length of the card (C).

7. A reader according to one of claims 5 or 6, **characterised in that** the slides (36) are longitudinally shifted backwards with respect to the front transversal edge (20) of the card (C) when the latter is in its operational position.

8. A reader according to any one of claims 3 to 7, **characterised in that** the component block (G) is arranged at the front longitudinal end of the box (10), and **in that** both upper connection arms (58) extend substantially backwards from the component block (G) layout area (50).

9. A reader according to any one of the preceding claims, **characterised in that** the component block (G) layout area (50) is a recess formed in a central portion of the upper wall (32) ot the box (10) which is made of a transparent material.

10. A reader according to any one of the preceding claims, **characterised in that** the upper wall (32) of the box is made by moulding transparent plastic material.

11. A reader according to any one of the preceding claims, **characterised in that** it includes a lower wall (34) which extends transversally between the slides (36) and which is made of a transparent material.

12. A reader according to the preceding claim, **characterised in that** the lower wall (34) of the box is made by moulding a transparent plastic material.

13. A reader according to any one of the preceding claims, **characterised in that** the maximum transversal width of the component block (G) is substantially equal to the transversal width of the contact pad (P).

14. A reader according to any one of the preceding claims, **characterised in that** the transversal width of the electric connector is substantially equal to the transversal width of the contact pad (P).

15. A reader according to any one of the preceding claim, **characterised in that** the component block includes a support plate made of an isolating material (PCB) the profile of which is substantially rectangular and which is located above the contact pad (P), substantially at right angle therewith, and which supports the components (40, 46, 48) of the component block (G).

16. A reader according to the preceding claim, **characterised in that** the support plate is a printed circuit board.

17. A reader according to the preceding claim, **characterised in that** the electric connector (40) is mounted on the lower face (42) of the printed circuit board (PCB) and **in that** the other components (46, 48) are arranged on the upper face (44) of the printed circuit board (PCB).

18. A reader according to claim 15, **characterised in that** the support plate belongs to the electric connector (40) and **in that** the other components (46, 48) are arranged on the upper face (44) of the support plate.

19. A reader according to any one of claims 15 to 18, in combination with claim 8, **characterised in that** the upper face (44) of the support plate (PCB) carries at least one lamp light (48) visible from the outside through the box (32).

20. A reader according to any one of claims 15 to 19, in combination with one of claims 13 or 14, **characterised in that** the transversal width of the support plate (PCB) is substantially equal to the transversal width of the contact pad (P).

21. A reader according to any one of claims 15 to 20, **characterised in that** the back transversal edge (47) of the printed circuit board (PCB) is located substantially at right angle with the back transversal edge of the contact pad (P).

22. A reader according to any one of claims 15 to 21, **characterised in that** the support plate (PCD) extends longitudinally frontwards beyond the front transversal edge of the contact pad (P).

23. A reader according to any one of claims 15 to 22, **characterised in that** the front transversal end of the support plate (PCB) includes means (54) for connecting the component block with a connection cable (12) of the box with a terminal device which the reader is connected to.

24. A chip card (24) connection box for connecting an electric contact pad chip card with an external terminal device, said box comprising:
- connection means (54) for connecting an external device,
- at least one internal electric connector (40) for connecting the electric pads (pi) of the chip card,
- a chip card received in said box, said chip card including contact pads connected to the electric connector and visual indications (28) at the surface of the card,
- a material extending above said visual indications,
**characterised in that** the material is transparent so that the visual indications are visible through the box.

## Patentansprüche

1. Lesegerät (24) für Chipkarten (C), um eine Chipkarte mit elektrischen Kontaktbereichen an eine externe Endvorrichtung anzuschließen, wobei das genannte Lesegerät umfasst:
- ein Gehäuse, dessen Körper (32, 34) eine funktionelle Position der Karte innerhalb des Gehäuses definiert,
- mindestens einen internen elektrischen Steckverbinder (40), um die Kontaktbereiche (pi) der Chipkarte anzuschließen,
- Verbindungsmittel (54), um die genannte externe Endvorrichtung zu verbinden,
- wobei der genannte Körper mindestens einen Teil (52, 58, 60) umfasst, das die genannte funktionelle Position unmittelbar und teilweise bedeckt,
**dadurch gekennzeichnet, dass** das genannte Teil (52, 58, 60) aus einem durchsichtigen oder durchscheinenden Material hergestellt wird.

2. Kartenlesegerät gemäß Anspruch 1, **dadurch gekennzeichnet, dass** das genannte Teil (52, 58, 60) durch Formerei hergestellt wird.

3. Lesegerät gemäß dem vorangehenden Anspruch, **dadurch gekennzeichnet, dass** der Anordnungsbereich (50) des Komponentenblocks (G) mit den Gleitschienen (36) anhand von zwei gegenüberliegenden oberen Armen (58) verbunden ist, die sich im Wesentlichen in einer Querrichtung erstrecken.

4. Lesegerät gemäß dem vorangehenden Anspruch, **dadurch gekennzeichnet, dass** die mittlere Breite jedes Verbindungsarms (58) etwa der Länge der zugeordneten Gleitschiene (36) entspricht.

5. Lesegerät gemäß einem der Ansprüche 3 oder 4, **dadurch gekennzeichnet, dass** die Länge der Gleitschiene (36) kleiner ist als die Länge der Karte (C).

6. Lesegerät gemäß dem vorangehenden Anspruch, **dadurch gekennzeichnet, dass** die Länge der Gleitschiene (36) etwa einem Drittel der Länge der Karte (C) entspricht.

7. Lesegerät gemäß einem der Ansprüche 5 oder 6, **dadurch gekennzeichnet, dass** die Gleitschienen (36) in Längsrichtung nach hinten in Bezug auf den vorderen Querrand (20) der Karte (C) hin versetzt sind, wobei diese sich in ihrer funktionalen Position befindet.

8. Lesegerät gemäß einem der Ansprüche 3 bis 7, **dadurch gekennzeichnet, dass** der Komponentenblock (G) am vorderen Längsende des Gehäuses (10) vorgesehen ist, und dass sich die beiden oberen Verbindungsarme (58) ab dem Anordnungsbereich (50) des Komponentenblocks (G) etwa nach hinten erstrecken.

9. Lesegerät gemäß einem der vorangehenden Ansprüche, **dadurch gekennzeichnet, dass** der Anordnungsbereich (50) des Komponentenblocks (G) eine in einem mittleren Abschnitt aus einem transparenten Material der oberen Wand (32) des Gehäuses (10) gebildete Aufnahme ist.

10. Lesegerät gemäß einem der vorangehenden Ansprüche, **dadurch gekennzeichnet, dass** die obere Wand (32) des Gehäuses aus transparentem Kunststoff geformt ist.

11. Lesegerät nach einem der vorangehenden Ansprüche, **dadurch gekennzeichnet, dass** es eine untere Wand (34) umfasst, die sich quer zwischen den Gleitschienen (36) erstreckt und aus transparentem Material besteht.

12. Lesegerät nach dem vorangehenden Anspruch, **dadurch gekennzeichnet, dass** die unter Wand (34) des Gehäuses aus transparentem Kunststoff geformt ist.

13. Lesegerät nach einem der vorangehenden Ansprüche, **dadurch gekennzeichnet, dass** die maximale Querbreite des komponentenblocks (G) etwa der Querbreite des Kontaktfelds (P) entspricht.

14. Lesegerät gemäß einem der vorangehenden Ansprüche, **dadurch gekennzeichnet, dass** die Querbreite des elektrischen Steckers etwa der Querbreite des Kontaktfelds (P) entspricht.

15. Lesegerät gemäß einem der vorangehenden Ansprüche, **dadurch gekennzeichnet, dass** der Komponentenblock eine Tragplatte aus isolierendem Material (PCB) mit etwa rechteckiger Kontur umfasst, die sich über dem Kontaktfeld (P), etwa lotrecht zu diesem befindet und die Komponenten (40, 46, 48) des Komponentenblocks (G) trägt.

16. Lesegerät gemäß dem vorangehenden Anspruch, **dadurch gekennzeichnet, dass** die Tragplatte eine gedruckte Schaltplatte ist.

17. Lesegerät gemäß dem vorangehenden Anspruch, **dadurch gekennzeichnet, dass** der elektrische Stecker (40) unter der unteren Seite (42) der gedruckten Schaltplatte (PCB) montiert ist, und dass die anderen Komponenten (46, 48) auf der oberen Seite (44) der gedruckten Schaltplatte (PCB) vorgesehen sind.

18. Lesegerät gemäß Anspruch 15, **dadurch gekennzeichnet, dass** die Tragplatte Bestandteil des elektrischen Steckers (40) ist, und dass die anderen Komponenten (46, 48) auf der oberen Seite (44) der Tragplatte vorgesehen sind.

19. Lesegerät gemäß einem der Ansprüche 15 bis 18 gemeinsam mit Anspruch 8, **dadurch gekennzeichnet, dass** die obere Seite (44) der Tragplatte (PCB) mindestens eine Leuchte (48) umfasst, die von außen durch das Gehäuse (32) hindurch sichtbar ist.

20. Lesegerät gemäß einem der Ansprüche 15 bis 19 gemeinsam mit einem der Ansprüche 13 oder 14, **dadurch gekennzeichnet, dass** die Querbreite der Tragplatte (PCB) etwa der Querbreite des Kontaktfelds (P) entspricht.

21. Lesegerät gemäß einem der Ansprüche 15 bis 20, **dadurch gekennzeichnet, dass** der hintere Querrand (47) der gedruckten Schaltplatte (PCB) etwa lotrecht zum hinteren Querrand des Kontaktfelds (P) verläuft.

22. Lesegerät gemäß einem der Ansprüche 15 bis 21, **dadurch gekennzeichnet, dass** die Tragplatte (PCB) sich in Längsrichtung nach vorne, über den vorderen Querrand des Kontaktfelds (P) hinaus erstreckt.

23. Lesegerät gemäß einem der Ansprüche 15 bis 22, **dadurch gekennzeichnet, dass** das vordere Querende der Tragplatte (PCB) Mittel (54) umfasst für den Anschluss des Komponentenblocks mit einem Verbindungskabel (12) des Gehäuses an eine Terminalvorrichtung, mit der das Lesegerät verbunden ist.

24. Anschlussgehäuse für Chipkarte (24), um eine Chipkarte mit elektrischen Kontaktbereichen an eine externe Terminalvorrlchtung anzuschließen, wobei das genannte Gehäuse umfasst:
- Anschlussmittel (54) für den Anschluss einer externen vorrichtung.
- mindestens einen internen elektrischen Stecker (40) für den Anschluss an die elektrischen Bereiche (pi) der Chipkarte,
- eine in dem genannten Gehäuse aufgenommene Chipkarte, wobei die genannte Chipkarte am elektrischen Strecker angeschlossene Kontaktbereiche umfasst, und Sichtanzeigen (28) auf der Oberfläche der Karte,
- ein Material, das sich über den genannten Sichtanzeigen erstreckt,
**dadurch gekennzeichnet, dass** das Material transparent ist, damit die genannten Sichtanzeigen durch das Gehäuse hindurch sichtbar sind.
